# EUROPEAN PATENT SPECIFICATION

(11) **EP 2 803 916 B1**
(45) Date of publication and mention of the grant of the patent: **28.11.2018**
(21) Application number: 14168275.7
(22) Date of filing: 14.05.2014
(51) Int. Cl.: F24F 3/16, F24F 11/00

(54) **Air conditioner and method for operating the same**
Klimaanlage und Verfahren zum Betrieb davon
Climatiseur et procédé de fonctionnement correspondant

(30) Priority: 14.05.2013 KR 20130054578
(43) Date of publication of application: 19.11.2014
(73) Proprietor: LG Electronics Inc., Seoul 150-721 (KR)
(72) Inventor: Jung, Yeekyeong, 641-110 Kyungsangnam-do (KR); Hyun, Okchun, 641-110 Kyungsangnam-do (KR); Park, Hyungho, 641-110 Kyungsangnam-do (KR)
(74) Representative: Vossius & Partner Patentanwälte Rechtsanwälte mbB

(56) References cited:
- DE-A1- 4 334 956
- DE-A1- 10 360 237
- DE-U1-202004 012 063
- US-A1- 2005 257 540
- US-A1- 2012 251 397

## Description

### BACKGROUND OF THE INVENTION

### Field of the invention

The present invention relates to an air conditioner. More specifically, the present invention relates to an air conditioner in which an air cleaner cleans air; and a method for operating the same.

### Description of the Related Art

In general, the air conditioner is a machine for cooling or heating a room by using a refrigerating cycle including a compressor, an outdoor heat exchanger, an expansion valve, and an indoor heat exchanger.

The air conditioner may have a room cooler for cooling the room, and a room heater for heating the room. Or, the air conditioner may be a room cooling and heating air conditioner for cooling or heating the room.

The air conditioner may have an air cleaner provided thereto for collecting and removing foreign matter, such as dust, and the like, from air.

An air conditioner according to the preamble of claim 1 is disclosed in DE 20 2004 012063 U1.

### SUMMARY OF THE INVENTION

Accordingly, the present invention has an object of the present invention to provide an air conditioner which can show a high cleaning capability while taking a sensing performance of an air cleanness sensor into account; and a method for operating the same.

### Technical Solution

To achieve the objects of the present invention, there is provided an air conditioner having the features of claim 1.

The control unit may turn off the air cleaner, if the present value of the cleanness sensed at the cleanness sensor again is higher than the set value after the air cleaner is turned on in the stabilization mode.

The control unit may turn off the air cleaner, if the present value of the cleanness sensed at the cleanness sensor again is higher than the set value after the air cleaner is turned on in the general cleaning mode.

The air cleaner may include an ionizer arranged at the air inlet for generating ions as a carbon fiber electrode therein discharges.

The air cleaner may further include an electrostatic filter for passing the air introduced to the air inlet to collect foreign matter charged by the carbon fiber electrode.

In another aspect of the present invention, a method for operating an air conditioner in which a cleanness sensor senses cleanness at set intervals and an air cleaner cleans air, may include a first step for turning on the air cleaner, if a present value of the cleanness sensed at the cleanness sensor for an initial set time period is lower than a recent value sensed at the cleanness sensor before; and a second step for turning on the air cleaner, if the present value of the cleanness sensed at the cleanness sensor after the initial set time period is lower than a set value.

The first step may include the step of the cleanness sensor to sense the cleanness after the turning on of the air cleaner again, and to turn off the air cleaner, if the present value of the cleanness sensed at the cleanness sensor again is higher than the set value.

The first step may include a step for resetting a timer when the air cleaner is turned on, a step for storing the present value before the air cleaner is turned on as a recent value, a step for sensing the present value of the cleanness at the cleanness sensor, again, and a step for turning off the air cleaner if the present value of the cleanness sensed at the cleanness sensor again is higher than the set value.

The initial set time period may be at least three times of the set period.

The second step may include the step of the cleanness sensor to sense the cleanness again after turning on the air cleaner, and to turn off the air cleaner, if the present value of the cleanness sensed at the cleanness sensor again is higher than the set value.

The first step may include a step for resetting a timer when the air cleaner is turned on, a step for storing the present value before the air cleaner is turned on as a recent value, a step for sensing the present value of the cleanness at the cleanness sensor, again, and a step for turning off the air cleaner if the present value of the cleanness sensed at the cleanness sensor again is higher than the set value.

The second step may include a step for resetting a timer when the air cleaner is turned on, a step for storing the present value before the air cleaner is turned on as a recent value, a step for sensing the present value of the cleanness at the cleanness sensor, again, and a step for turning off the air cleaner, if the present value of the cleanness sensed at the cleanness sensor again is lower than the set value, and a time period after the timer is reset exceeds a reference set time period.

The second step may include a step for resetting a timer when the air cleaner is turned on, a step for storing the present value before the air cleaner is turned on as a recent value, a step for sensing the present value of the cleanness at the cleanness sensor, again, and a step for returning to the step after the step of the cleanness sensor to sense the present value again, if the present value of the cleanness sensed at the cleanness sensor again is lower than the set value, a time period after the timer is reset is shorter than a reference set time period, and the present value exceeds a recent value.

The second step may include a step for resetting a timer when the air cleaner is turned on, a step for storing the present value before the air cleaner is turned on as a recent value, a step for sensing the present value of the cleanness at the cleanness sensor, again, and a step for returning to the step for resetting the timer, if the present value of the cleanness sensed at the cleanness sensor again is lower than the set value, a time period after the timer is reset is shorter than a reference set time period, and the present value lower than a recent value.

The reference set time period may be set longer than the initial set time period.

### BRIEF DESCRIPTION OF THE DRAWINGS

FIG. 1 is a sectional view illustrating an air conditioner in accordance with a preferred embodiment of the present invention;
FIG. 2 is a front view illustrating a case of an air conditioner in accordance with a preferred embodiment of the present invention;
FIG. 3 is a plan view illustrating an inside of an ionizer in an air conditioner in accordance with a preferred embodiment of the present invention;
FIG. 4 is a sectional view illustrating an ionizer in an air conditioner in accordance with a preferred embodiment of the present invention;
FIG. 5 is a block diagram illustrating air conditioner control;
FIG. 6 is a flow chart illustrating the steps of a method for operating an air conditioner in accordance with a preferred embodiment of the present invention;
FIG. 7 is a flow chart illustrating the steps of the A mode in FIG. 6; and
FIG. 8 is a flow chart illustrating the steps of the B mode in FIG. 6.

### DETAILED DESCRIPTION OF THE INVENTION

In what follows, an air conditioner; and a method for operating the same according to preferred embodiments of the present invention will be described in detail with reference to the appended drawings.

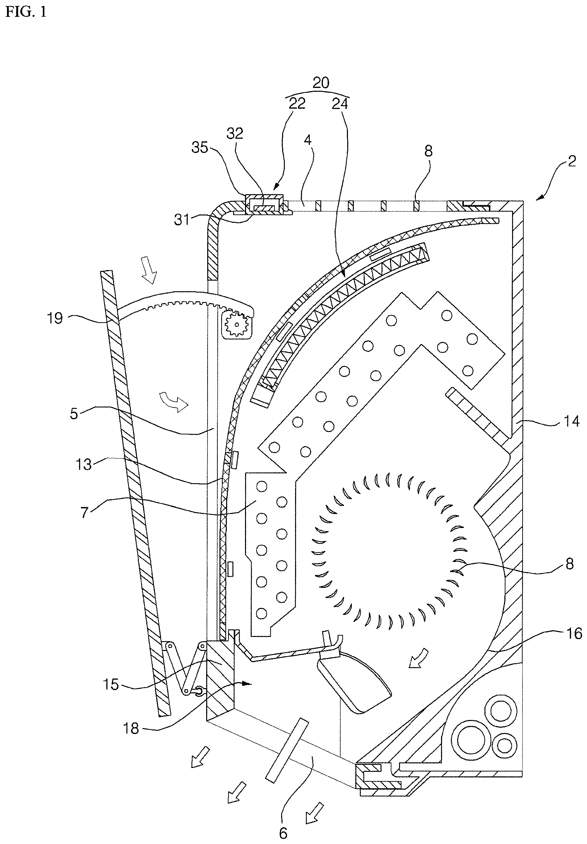

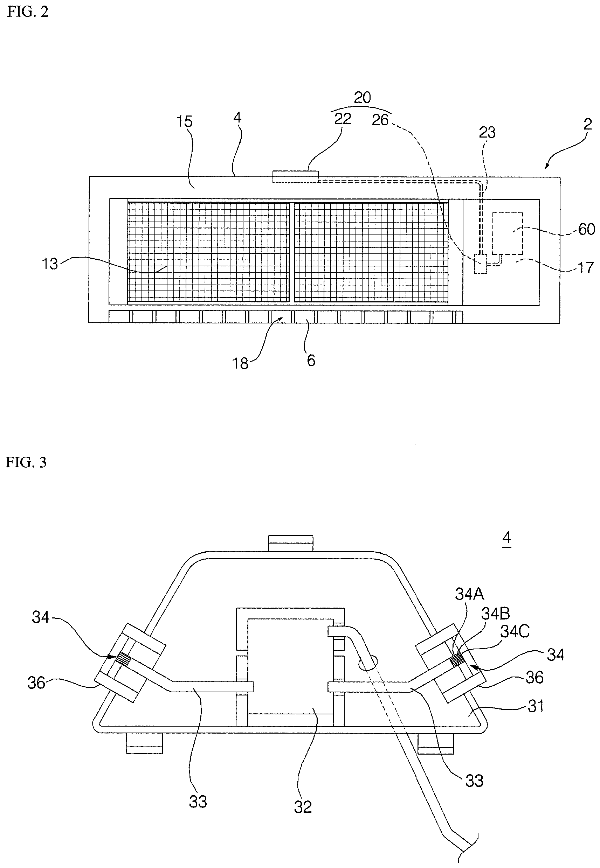

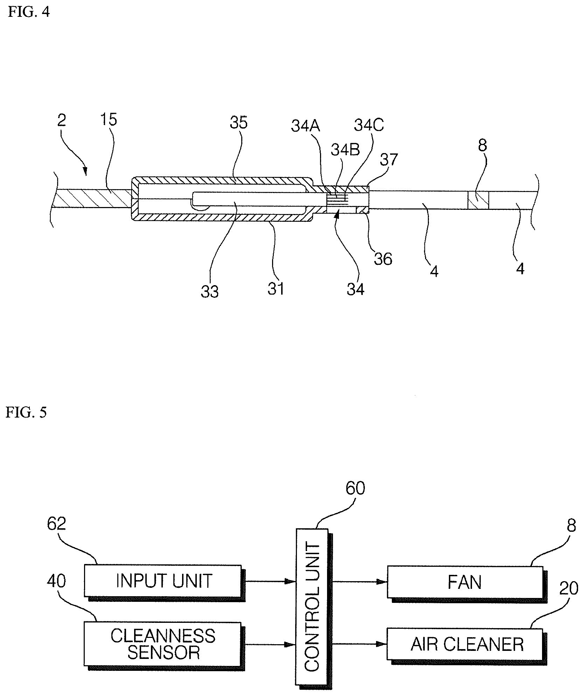

FIG. 1 is a sectional view illustrating an air conditioner in accordance with a preferred embodiment of the present invention, FIG. 2 is a front view illustrating a case of an air conditioner in accordance with a preferred embodiment of the present invention, FIG. 3 is a plan view illustrating an inside of an ionizer in an air conditioner in accordance with a preferred embodiment of the present invention, and FIG. 4 is a sectional view illustrating an ionizer in an air conditioner in accordance with a preferred embodiment of the present invention.

Referring to FIGS. 1 to 4, the air conditioner includes a case 2, a fan 8 mounted in the case 2, and an air cleaner 20 mounted to the case 2.

The case 2 has at least one air inlet 4 and 5, and at least one air outlet 6 formed therein. The case 2 may have a heat exchanger 7 mounted thereto for heat exchanging air introduced thereto through the air inlet 4 and 5. The heat exchanger 7 may be mounted to be positioned between the air inlet 4 and 5 and the air outlet 7 in an air flow direction. The case 2 may has an upper side having an upper side air inlet 4 formed therein, a front side having a front side air inlet 5 formed therein, and a lower side having the air outlet 6 formed therein. The upper side air inlet 4 in the case 2 may have a suction grill 8 formed thereon. The case 2 may have a pre-filter 13 mounted thereto through which the air introduced through the air inlet 4 and 5 passes. The pre-filter 13 may be mounted to have a portion thereof positioned in rear of the front side air inlet 5 and the other portion thereof positioned under the upper side air inlet 4. The pre-filter 13 may be mounted to position within the case 2. Large foreign matter passed through the air inlet 4 and 5 may be filtrated from the air at the pre-filter 13.

The case 2 may includes a base 14, and a suction body 15 mounted to the base 14. The case 2 may have an air flow passage 16 formed therein for guiding the air introduced through the air inlet 4 and 5. The case 2 may have an electric machinery room 17 formed therein for mounting a control unit 60 to be described later thereto. The air flow passage 16 and the electric machinery room 17 may be formed on the base 14. There may be a discharger 18 arranged on a lower side of the case 2 for discharging the air passed through an inside of the case 2 to a room. The air outlet 6 may be formed under the suction body 15, for discharging the air to the room from the inside of the case 2 through passing the discharger 18 and the air outlet 6 in succession.

The case 2 may have a front cover 19 mounted in front of the front side air inlet 5 for shading the front side air inlet 5. The front cover 19 may be formed larger than the front side air inlet 5, and may be arranged to move back and forth or swing. When the air conditioner is in operation, the front cover 19 may form an air introduction passage with the front side of the case 2, and room air may be introduced through the front side air inlet 5 after passed through the air introduction passage formed between the front cover 19 and the case 2.

The fan 8 may be mounted to position between the base 14 and the suction body 15, and may draw the air through the air inlet 4 and 5 and discharge through the air outlet 6 passed through the heat exchanger 7. The fan 8 includes a motor mounted to the electric machinery room 17, and a blower connected to the motor rotatably positioned between the base 14 and the suction body 15.

The air cleaner 20 may be a machine for cleaning the air by using electricity. The air cleaner 20 may include a plasma electric dust collector, an ionizer, or the like. The specification will be described taking the ionizer as an example.

The air cleaner 20 may include the ionizer 22 arranged at the air inlet 4. The air cleaner 20 may include an electrostatic filter 24 for passing the air introduced through the air inlet 4. The air cleaner 20 may include a high voltage generator 26 for applying a high voltage to the ionizer 22.

The ionizer 22 may be connected to the high voltage generator 26 with a connecting wire 23. The ionizer 22 may ionize the air with the high voltage generated by the high voltage generator 26. The ionizer 22 may be mounted to one of the upper side air inlet 4 and the front side air inlet 5. The ionizer 22 may generate ions by ionizing molecules in the air. The ionizer 22 has a carbon fiber electrode for ionizing the molecules in the air with discharge therefrom, and the ions generated thus can charge foreign matter in the air. The ionizer 22 may be mounted to the air inlet 4 to face the air inlet 4. The air conditioner may have an ionizer mounting region at a portion of an air inlet 4 region having no suction grill 8 formed thereon, and the ionizer 22 may be mounted to the ionizer mounting region having no suction grill 8 formed thereon.

The electrostatic filter 24 can collect the foreign matter charged by the ionizer 22. The electrostatic filter 24 may collect the foreign matter charged by the ionizer 22 and passed through the pre-filter 13. The electrostatic filter 24 may be positioned between the pre-filter 13 and the heat exchanger 7 in the air flow direction. Of the foreign matter charged by the ions, the foreign matter passed through the pre-filter 13 may be collected at the electrostatic filter 24. The electrostatic filter 24 may include a filter body, and a filter case for mounting the filter body thereto. The filter body is an electrostatic filter body having static electricity given thereto at the time of fabrication, and the foreign matter charged thus may stick to the filter body owing to the static electricity of the filter body. The filter body may be formed in a shape in which thin films are bent in zigzag.

The high voltage generator 26 may be mounted to position in the electric machinery room 17 in the case 2. The high voltage generator 26 may be mounted not to be exposed to an outside of the electric machinery room 17, and may be protected by the base 14 and the suction body 15.

The ionizer 22 includes a housing 31 arranged to the air inlet 4, a PCB 32 mounted to the housing 31, a wire 33 having one end connected to the PCB 32, a carbon fiber electrode 34 formed on the other end of the wire 33, and a cover 35 coupled to the housing 31 for protection of the PCB 32, the wire 33 and the carbon fiber electrode 34.

The housing 31 may construe a case of the ionizer 22 together with the cover 35, and the PCB 32, the wire 33 and the carbon fiber electrode 34 may be protected by the cover 35. The housing 31 may function as a lower case of the ionizer 22. The cover 35 may function as an upper case of the ionizer 22. The housing 31 may have a lower cover portion 36 formed thereon for protecting a lower side of a circumference of the carbon fiber electrode 34. The lower cover portion 36 may be formed to be projected toward the air inlet 4.

The PCB 32 is a circuit for applying the high voltage to the wire 33 for the carbon fiber electrode 34 to discharge. The PCB 32 may have a connecting wire 23 connected thereto. The PCB 32 may have a number of the wires 33 the same with a number of the carbon fiber electrodes 34 connected thereto. A ratio of numbers of the PCB 32, the wires 33, and the carbon fiber electrodes 34 may be 1:N:N when the number of the carbon fiber electrodes 34 is N. The PCB 32 includes a circuit board, and different electronic devices mounted to the circuit board. The PCB 32 may generate a high voltage AC current, an anodic or cathodic DC current, and a pulse DC current and may supply the same to the wire 33. The PCB 32 may be a constant voltage circuit for generating the cathodic DC current, and can forward an output voltage of -7kVp ± 8% and an output frequency of 100Hz ± 10%. The wire 33 includes a lead wire for forwarding the high voltage applied to the PCB 32 to the carbon fiber electrodes 34 , and a sheathing of plastic for surrounding an outside of the lead wire. The wire 33 connects the PCB 32 to the carbon fiber electrodes 34, electrically. The wire 33 may be arranged as many as the number of the carbon fiber electrodes 34. 2 to 4 of the wires 33 may be arranged on left and right sides of the housing 31 spaced from each other.

The carbon fiber electrode 34 discharges to ionize the molecules in the air, to generate anions, such as OH-, O-, or cations, such as H+. The carbon fiber electrode 34 may include a plurality of carbon fibers 34A, 34B, and 34C arranged to face the air inlet 4, for generating the ions by corona discharge. It is preferable that the carbon fiber electrode 34 is a plurality of brush bundles of superfine carbon fibers each having a diameter of micrometer units tied with a wire 33. The carbon fiber electrode 34 may be a brush bundle having about 1000 carbon fibers each with a diameter of 7µm put together. The plurality of carbon fibers 34A, 34B, and 34C have a low ozone O₃ generation rate, and generate high concentration of ions to be able to charge micron particles. The carbon fiber electrode 34 which is the brush bundle of the tied plurality of carbon fibers 34A, 34B, and 34C can discharge only one of the plurality of carbon fibers. Depending on embodiments, the carbon fiber electrode 34 may be formed in a needle shape or a net shape having a pattern. A plurality of the carbon fiber electrodes 34 may be arranged in one ionizer 22. It is preferable that the plurality of the carbon fiber electrodes 34 are arranged spaced from one another for minimizing mutual interference. It is preferable that the plurality of the carbon fiber electrodes 34 are arranged on an imaginary plane at equal distances perpendicular to a flow direction of the air, on left and right sides of the air inlet 4, symmetrically. The carbon fiber electrodes 34 may be arranged horizontally to face the air inlet 4. The plurality of the carbon fiber electrodes 34 may be arranged in directions different from one another. The carbon fiber electrode 34 may include a first carbon fiber electrode arranged to face a left side of a rear of the housing 31 in a length direction thereof and a second carbon fiber electrode arranged to face a right side of the rear of the housing 31 in the length direction. Each of the first carbon fiber electrode and the second carbon fiber electrode may include a plurality of carbon fibers 34A, 34B and 34C. The ions generated by the carbon fiber electrode 34 charge the foreign matter. The anion can provide an electron to the foreign matter to charge the foreign matter as a cathode. The cation takes an electron from the foreign matter to charge the foreign matter as an anode.

The cover 35 may have an upper cover portion 37 formed projected from the cover 35 to surround an upper side of a circumference of the carbon fiber electrode 34. The upper cover portion 37 can prevent a conductor from being brought into contact with the carbon fiber electrode 34 when a user puts the conductor therein, and can prevent the foreign matter in the air from hitting the plurality of the carbon fiber electrodes 34, directly. The upper cover portion 37 may be formed projected from the cover 35. The cover 35 may have a portion arranged to face the air inlet 4, and the upper cover portion 37 may be formed projected from a side of the cover 35 facing the air inlet 4. The upper cover portion 37 may have a lower side formed in an opened semi-cylindrical shape. The upper cover portion 37 and the lower cover portion 36 may be arranged in a shape of a hollow cylinder when the housing 31 couples to the cover 35 to form a hollow space between the upper cover portion 37 and the lower cover portion 36 for positioning the carbon fiber electrode 34 thereto.

FIG. 5 is a block diagram illustrating air conditioner control. The air conditioner includes a cleanness sensor 40 for sensing cleanness of the air, and a control unit 60 for controlling the air conditioner.

The cleanness sensor 40 may be mounted to the case 2. The cleanness sensor 40 may be mounted to a downstream of the air inlet 4 and 5 in an air flow direction. It is also possible that the cleanness sensor 40 is mounted to an upstream of the air inlet 4 and 5 in an air flow direction. The cleanness sensor 40 senses the cleanness of the air drawn into the air inlet 4 and 5 at set intervals (C minutes). The cleanness sensor 40 forwards a result of sensing to the control unit 60, and the control unit 60 receives a sensed result from the cleanness sensor 40 to sense the cleanness. The cleanness sensor 40 may be a sensor which can sense cleanness of the air, such as a gas sensor or a dust sensor. If the cleanness sensor 40 is the gas sensor, the gas sensor may detect a specific chemical (CO, or VOC) contained in the gas, convert a concentration thereof into an electric signal, and forward the electric signal to the control unit 60. If the cleanness sensor is the dust sensor, the dust sensor may detect a concentration of the dust in the air, convert the concentration into an electric signal, and forward the electric signal to the control unit 60. The cleanness sensor 40 may be singular or a combination of plural sensors. The cleanness sensor 40 can forward the higher sensed value to the control unit 60 as the air is the cleaner. The cleanness sensor 40 can forward the lower sensed value to the control unit 60 as the air is polluted the more. The cleanness sensor 40 may sense the cleanness at the set intervals (C minutes) and forward the present sensed value to the control unit 60 at the set intervals.

The air conditioner may further include an input unit 62 for the user or the like to input various orders on the air conditioner thereto. The input unit 62 may forward a result of input to the control unit 60, and the control unit 60 may receive the signal from the input unit 62 and control the air conditioner according to input contents from the input unit 62. The input unit 62 may have turn on and turn off of the air conditioner applied thereto. The input unit 62 may have operation modes, such as cooling operation, and cleaning operation applied thereto. The control unit 60 may turn on the fan 8 when the air conditioner is in operation, and may turn off the fan 8 when the air conditioner is turned off. The control unit 60 may turn on/off the air cleaner 20. The control unit 60 may turn on the ionizer 22 when the air cleaner 20 is turned on, and turn off the ionizer 22 when the air cleaner 20 is turned off. When the air cleaner 20 is turned on, the control unit 60 may apply a current to the high voltage generator 26 to turn on the ionizer 22. When the air cleaner 20 is turned off, the control unit 60 cuts off the current to the high voltage generator 26 for turning off the ionizer 22.

The control unit 60 may control the air cleaner 20 to be turned on/off according to the input to the input unit 62 and a result of sensing at the cleanness sensor 40. The control unit 60 may control the air cleaner 20 to be turned on/off taking the input to the input unit 62, the result of sensing at the cleanness sensor 40, and a time period in which the air cleaner 20 is turned on into account, altogether. When the air conditioner is in operation, the control unit 60 may control the air cleaner 20 to be turned on/off regardless whether the air conditioner being in room cooling operation, or in cleaning operation. When the air conditioner is in operation, and the air conditioner is in room cooling operation, the control unit 60 may control the air cleaner 20 to be turned on/off. When the air conditioner is in operation, and the air conditioner is in cleaning operation, the control unit 60 may control the air cleaner 20 to be turned on/off. Though the turn on/off of the air cleaner 20 will be described when the air conditioner is in operation, the present invention is not limited to this, but it is natural that the present invention can include the turn on/off of the air cleaner 20 when the air conditioner is in cleaning operation.

The cleanness sensor 40 may sense the cleanness at set intervals (C minutes) and forward a sensed value to the control unit 60 when the air conditioner is in operation, i.e., while the air conditioner is in operation.

Upon starting operation of the air conditioner, the control unit 60 may turn on the air cleaner 20 taking stabilization of the cleanness sensor 40 into account for an initial set time period (D minutes). And, after the initial set time period (D minutes) is passed, the control unit 60 may turn on the air cleaner 20 with reference to reference cleanness (i.e., the set value).

Initially, the cleanness sensor 40 may have an initial output value lower than an actual cleanness, and the cleanness may be stabilized as a time passes. The air conditioner may be controlled taking such stabilization of the cleanness sensor 40 into account, and it is preferable that the air conditioner is controlled such that a control pattern (A stabilization mode) before the initial set time period (D minutes) is reached is different from the other control pattern (A general cleaning mode) after the initial set time period (D minutes) is reached.

If a present value SV2 of the cleanness sensed at the cleanness sensor 40 for the initial set time period (D minutes) is lower than a recent value SV1 sensed at the cleanness sensor 40, the control unit 60 may control the air cleaner 20 in the stabilization mode in which the air cleaner 20 is turned on. In this case, the initial set time period (D minutes) may be at least three times of the set time period (C minutes). And, the recent value is a value stored in a memory, and may be a value sensed before if the cleanness sensor 40 senses the present value by sensing the cleanness, newly. At the time of initial operation of the air conditioner, the recent value may be a specific value stored in the memory or the like, and a recent valve after the initial operation of the air conditioner may be a value stored finally in previous operation. The cleanness sensor 40 may sense the cleanness at the set intervals (C minutes) for the initial set time period (D minutes) and may forward a sensed value. If the control unit 60 can determine a previous sensed value SV1 and the present sensed value SV2 at the set intervals (C minutes), and a special condition takes place, in which the present cleanness becomes lower than the previous cleanness, the control unit 60 may turn on the air cleaner 20. That is, the air conditioner may maintain the air cleaner 20 in a turned off state for the stabilization time period of the cleanness sensor 40 and reduction of power consumption until the initial set time period (D minutes) is reached after starting of operation of the air conditioner, and if it is a case when the present cleanness is lower than the previous cleanness due to change of a room environment or the like in middle of the initial set time period (D minutes), the air conditioner may turn on the air cleaner 20.

If the present value of the cleanness sensed thus at the cleanness sensor 40 again is higher than the set value after turning on the air cleaner 20 in the stabilization mode, the control unit 60 may turn off the air cleaner 20.

The control unit 60 may turn off the air cleaner 20 if the present value SV2 of the cleanness sensed at the cleanness sensor 40 before the initial set time period (D minutes) is passed is higher than the set value X1. In this case, the set value is a value corresponding to the reference cleanness. That is, though the air conditioner has not passed the initial set time period (D minutes) yet, if the room is cleaned adequately owing to the turn on of the air cleaner 20, the air conditioner may turn off the air cleaner 20 before the initial set time period (D minutes) is reached for reducing power consumption.

The cleanness sensor 40 may sense the cleanness at the set intervals (C minutes) after initial set time period (D minutes) is passed and forward the sensed value.

If the present value SV2 of the cleanness sensed at the cleanness sensor 40 after the initial set time period (D minutes) is passed is lower than the set value X1, the control unit 60 may control the air cleaner 20 in the general cleaning mode in which the air cleaner 20 is turned on. In this case the set value X1 is a value corresponding to the reference cleanness.

In the general cleaning mode, if the present value of the cleanness sensed at the cleanness sensor 40 again after the air cleaner 20 is turned on is higher than the present set value, the control unit 60 may turn off the air cleaner 20. If the present value of the cleanness sensed at the cleanness sensor 40 after the initial set time period (D minutes) is passed is higher than the set value, the control unit 60 may turn off the air cleaner 20. Since it is a time when the cleanness sensor 40 is stabilized adequately as the initial set time period (D minutes) is passed, the air conditioner may turn on/off the air cleaner 20 with reference to the set value. If it is a time after the initial set time period (D minutes) is passed, it is natural that the control unit 60 can turn on/off the air cleaner 20 taking a time period in which the air cleaner 20 is kept turned on into account, altogether.

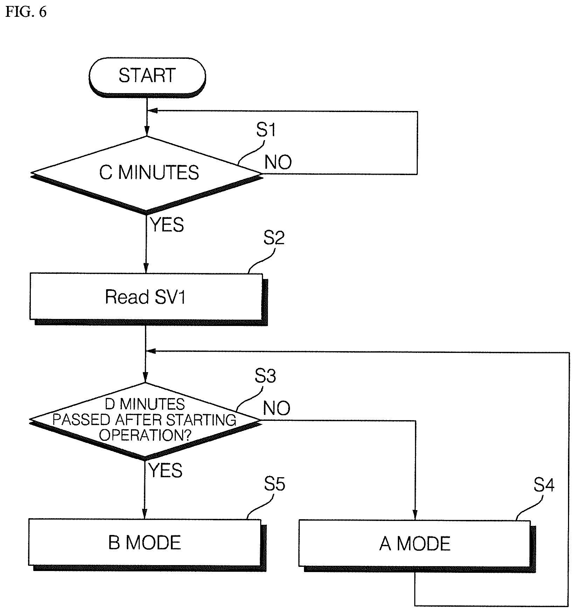

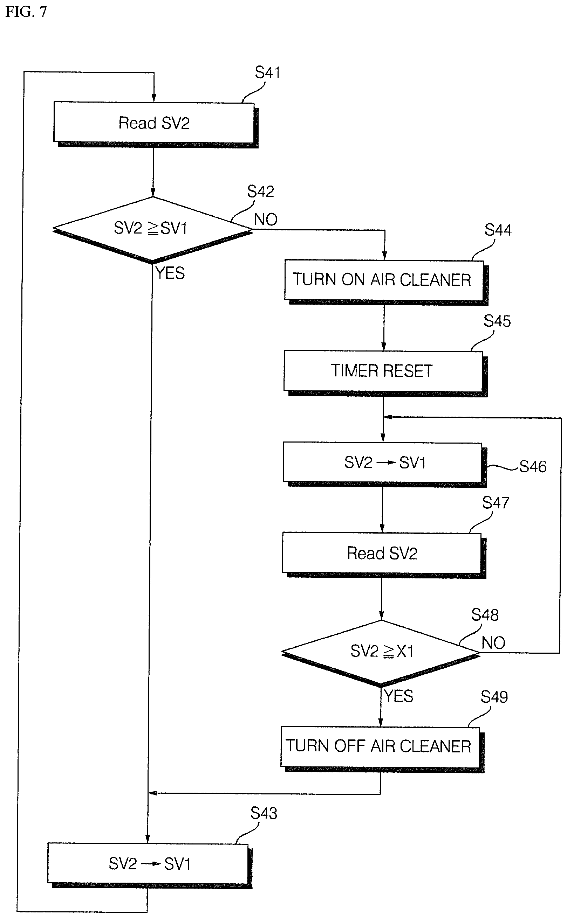

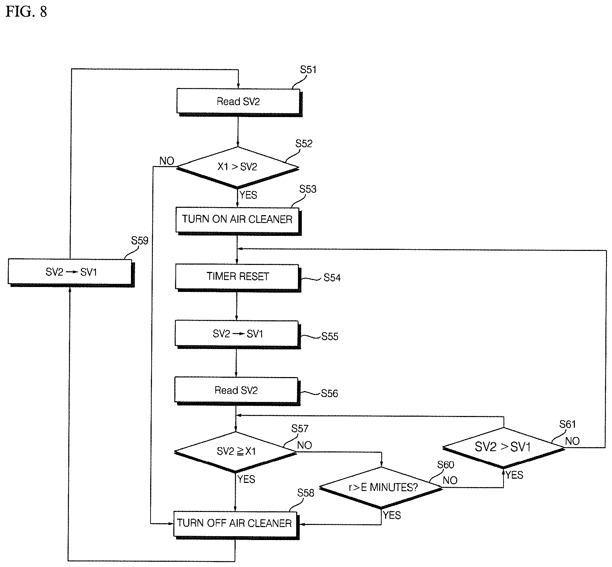

FIG. 6 is a flow chart illustrating the steps of a method for operating an air conditioner in accordance with a preferred embodiment of the present invention, FIG. 7 is a flow chart illustrating the steps of the A mode in FIG. 6, and FIG. 8 is a flow chart illustrating the steps of the B mode in FIG. 6.

In the method for operating the air conditioner, the cleanness sensor 40 may sense the cleanness at the set intervals (C minutes) when the air conditioner is in operation (Or, the air conditioner is in the cleaning operation). If C minutes are passed after starting of operation of the air conditioner, the cleanness sensor 40 may sense the cleanness and forward a sensed value SV1 to the control unit 60, and the control unit 60 may store the sensed value SV1 sensed at the cleanness sensor 40 to a memory or the like.(S1, and S2).

In the method for operating the air conditioner, if the initial set time period (D minutes) is not passed after starting of the operation of the air conditioner, an A mode (A first step) in FIG. 6 may be performed. (S3 and S4). In the method for operating the air conditioner, if the initial set time period (D minutes) is passed after starting of operation of the air conditioner, a B mode (A second step) in FIG. 6 may be performed. In the method for operating the air conditioner, the A mode (The first step) may be performed at first as a time is passed, and the B mode (The second step) may be performed, in succession. In the method for operating the air conditioner, the air conditioner may be turned off or the cleaning operation may be finished in middle of performing the A mode (The first step) or in middle of performing the B mode (The second step). In this case, if the air cleaner 20 is in a turned on state presently, the air conditioner may turn off the air cleaner 20 which is in a turned on state.

The A mode (The first step) in FIG. 6 will be described with reference to FIG. 7, and the B mode (The second step) in FIG. 6 will be described with reference to FIG. 8.

In the method for operating the air conditioner, in the A mode (The first step), the cleanness sensor 40 may sense cleanness and forward the cleanness to the control unit 60 (S41). The control unit 60 may compare the present value SV2 of the cleanness sensor 40 to a value SV1 stored in a memory or the like (Hereafter, recent value) (S42). If the present value SV2 is higher than the recent value SV1, the control unit 60 may store the present value SV2 as a new recent value SV1 in the memory or the like (S43). Then, the method for operating the air conditioner may return to the step S1 for the cleanness sensor 40 to sense the cleanness. The air conditioner may maintain a turned off state of the air cleaner 20, and no power is consumed by the air cleaner 20.

If the present value SV2 is lower than the recent value SV1 as a result of comparison of the present value SV2 to the recent value SV1, the control unit 60 may turn on the air cleaner 20 (S44). And, the control unit 60 may reset a timer (Not shown) (45). When the air cleaner 20 is turned on, the air cleaner 20 may clean the air to enhance the cleanness, and, if no pollution source is formed in a room, the air cleaner 20 can improve the cleanness. The control unit 60 may store the present value SV2 in the memory or the like as the recent value SV1 when the control unit 60 turns on the air cleaner 20 (S46). While the air cleaner 20 is turned on, the cleanness sensor 40 may sense a new cleanness (S47). The cleanness sensor 40 may sense the cleanness at set intervals after the timer is reset. The control unit 60 may compare the present value SV2 of the cleanness sensed newly at the cleanness sensor 40 to the set value X1 (S48). If the present value SV2 is lower than the set value X1 as a result of comparison of the present value SV2 to the set value X1, the method for operating the air conditioner returns to the step S46 for storing the present value SV2 which is lower than the set value as the recent value SV1. If the present value SV2 is higher than the set value X1 as the result of comparison of the present value SV2 to the set value X1, the method for operating the air conditioner may turn off the air cleaner 20 (S49). That is, after the air cleaner 20 is turned on, the cleanness sensor 40 senses the cleanness again, and, if the present value of the cleanness sensed again at the cleanness sensor 40 is higher than the set value X1, the air cleaner 20 may be turned off.

Then, the present value SV2 at the time of turning off of the air cleaner 20 may be stored as the recent value SV1, and the method for operating the air conditioner may return to the step S1 for the cleanness sensor 40 to sense the cleanness (S43) (S41).

The method for operating the air conditioner may perform the turn on/off of the air cleaner 20 described above at least two times within the initial set time period (D minutes), and, if the initial set time period (D minutes) is passed after starting of operation, the A mode (The first step) may be finished.

In the method for operating the air conditioner, in the B mode (The second step), the cleanness sensor 40 may sense the cleanness and forward the same to the control unit 60 (S51). The control unit 60 may compare the present value SV2 of the cleanness sensor 40 to the set value X1 stored in the memory or the like (S52). It the present value SV2 is lower than the set value X1, determining that the present cleanness is lower than the reference cleanness, the control unit 60 may turn on the air cleaner 20 (S53). When the air cleaner 20 is turned on, the air cleaner 20 may clean the air to enhance the cleanness.

In the method for operating the air conditioner, in the B mode (The second step), after turning on the air cleaner 20, the cleanness sensor 40 senses the cleanness again, and, if the present value of the cleanness sensed at the cleanness sensor 40 is higher than the set value X1, the air cleaner 20 may be turned off. The method for operating the air conditioner includes, in the B mode (The second step), a step S54 for resetting the timer when the air cleaner 20 is turned on, a step S55 for storing the present value SV2 before the air cleaner 20 is turned on as the recent value SV1, and a step S56 for the cleanness sensor 40 to sense the present value of the cleanness, again. In this case, it is possible that the step S54 for resetting the timer is performed together with the turning on of the air cleaner 20, and, of course, it is also possible that the step S54 for resetting the timer is performed with a time difference from the turning on of the air cleaner 20. The cleanness sensor 40 may sense the cleanness at the set intervals after the time is reset. If the present value SV2 of the cleanness sensed at the cleanness sensor 40 again is higher than the set value X1, the method for operating the air conditioner may include a step S57 and S58 of turning off the air cleaner 20. That is, if the room is cleaned by the turning on of the air cleaner 20, the air cleaner 20 may be turned off, to reduce power consumption by the air cleaner 20. The present value SV2 at the time of turning off of the air cleaner 20 may be stored as the recent value SV1, and the method for operating the air conditioner may return to the sep S1 for the cleanness sensor 40 to sense the cleanness (S59)(S51).

In the meantime, in the B mode (The second step), if the present value SV2 of the cleanness sensed at the cleanness sensor 40 again is lower than the set value X1 and a time period r after the time is reset exceeds a reference set time period (E minutes), the method for operating the air conditioner may include steps S57, S60, and S58 for turning off the air cleaner 20. In this case, the reference set time period (E minutes) may be a time period in which the air cleaner 20 is prevented from being kept turned on for a long time period excessively, and, it is preferable that the reference set time period (E minutes) is set longer than the set time period (C minutes) and the initial set time period (C minutes). That is, if the air cleaner 20 is kept turned on for the reference set time period (E minutes) after the air cleaner 20 is put into operation, the air cleaner 20 may be turned off, for the air conditioner to prevent the air cleaner 20 from consuming the power, excessively.

In the meantime, in the B mode (The second step), if the present value SV2 of the cleanness sensed at the cleanness sensor 40 again is lower than the set value X1, the time period r after the timer is reset is shorter than the reference set time period (E minutes), and the present value SV2 is higher than the recent value SV1, the method for operating the air conditioner may return to the steps (S57) (S60) (S61), and (S57) after the step for the cleanness sensor 40 to sense the cleanness, again. When the air cleaner 20 is in operation, and the reference set time period (E minutes) is not reached yet, if the cleanness rises higher than before, since it is a case the air conditioner is cleaning the room, it is preferable that the air cleaner 20 is not turned off, but maintain the air cleaner 20 to be turned on.

In the meantime, in the B mode (The second step), if the present value SV2 of the cleanness sensed at the cleanness sensor 40 again is lower than the set value X1, the time period r after the timer is reset is shorter than the reference set time period (E minutes), and the present value SV2 is lower than the recent value SV1, the method for operating the air conditioner may return to the steps S57, S60, S61, and S54 for resetting the timer. Though the present value SV2 of the cleanness is lower than the set value X1, the air cleaner 20 is in operation, and the reference set time period (E minutes) is not reached yet, if the cleanness becomes lower than before on the contrary, it may be determined that an additional pollution source is formed in the room within the reference set time period (E minutes). In this case, the air cleaner 20 is not turned off, but the method for operating the air conditioner may return to the step for resetting the timer for determining a new cleanness value sensed again more accurately.

The method for operating the air conditioner may repeat the turning on/off of the air cleaner 20 at least two times after the initial set time period (D minutes) is passed.

It will be apparent to those skilled in the art that the present invention is not intended to be limited to the above-described embodiment and drawings, and various changes or modifications may be made therein without departing from the scope of the present invention.

The air conditioner and a method for operating the same of the present invention have the following advantageous effects.

Power consumption by the air cleaner can be minimized while maintaining room air comfortable.

And, power consumption can be minimized while taking stabilization of the cleanness sensor into account.

And, the prevention of excessively long time turning on of the air cleaner permits to prevent the power from consumed excessively due to malfunction of the cleanness sensor in advance.

And, the air cleaner can be controlled at an optimum condition taking whether an additional pollution source is formed in a room within the reference time period or not into account.

## Claims

1. An air conditioner comprising:
a case (2) having an air inlet (4, 5) and an air outlet (6) formed therein;
a fan (8) mounted in the case;
an air cleaner (20) mounted to the case, wherein the air cleaner (20) includes an ionizer (22) arranged at the air inlet (4, 5) for generating ions using discharge from a carbon fiber electrode (34);
a cleanness sensor (40) for sensing cleanness of air introduced to the air inlet at a set interval; and
a control unit (60) configured for controlling the air cleaner (20) in at least two different modes,
**characterized in that** the two different modes are: a stabilization mode for an initial set time period at the start up of the air conditioner's operation, according to which the air cleaner (20) is turned on if the value sensed by the cleanness sensor (40) is lower than a previous value sensed by the cleanness sensor (40); and a general cleaning mode after the initial set time period, according to which the air cleaner (20) is turned on if the value sensed by the cleanness sensor (40) is lower than a set value,
wherein the control unit (60) is configured, in the stabilization mode, to turn off the air cleaner (20) if the cleanness value sensed by the cleanness sensor (40) is higher than the set value.

2. The air conditioner as claimed in claim 1, wherein the control unit (60) is configured, in the general cleaning mode, to turn off the air cleaner (20) if the cleanness value sensed by the cleanness sensor (40) is higher than the set value.

3. The air conditioner as claimed in claim 1, wherein the air cleaner (20) further includes an electrostatic filter (24) for passing the air introduced to the air inlet (4, 5) to collect foreign matter charged by the carbon fiber electrode (34).

4. A method for operating an air conditioner comprising a cleanness sensor (40) for sensing air cleanness at a set interval and an air cleaner (20) for cleaning air, wherein the air cleaner (20) includes an ionizer (22) arranged at an air inlet (4, 5) for generating ions using discharge from a carbon fiber electrode (34), the method comprising:
a) for an initial set time period at the start up of the air conditioner's operation, turning on the air cleaner (20) if a cleanness value sensed by the cleanness sensor (40) is lower than a previous value sensed by the cleanness sensor (40); and
b) after the initial set time period, turning on the air cleaner (20) if the cleanness value sensed by the cleanness sensor (40) is lower than a set value,
the method further comprising: in the initial set time period,
sensing the air cleanness at the set interval; and;
turning off the air cleaner (20) if the cleanness value sensed by the cleanness sensor (40) is higher than the set value.

5. The method as claimed in claim 4, further comprising: in the initial set time period,
resetting a timer when the air cleaner (20) is turned on;
storing the cleanness value based on which the air cleaner (20) is turned on;
after the storing step, sensing the cleanness value by the cleanness sensor (40); and
turning off the air cleaner (20) if the cleanness value sensed after the storing step is higher than the set value.

6. The method as claimed in any of claims 4 or 5, wherein the initial set time period is at least three times of the set interval.

7. The method as claimed in any of claims 4 to 6, further comprising: after the initial set time period,
sensing the air cleanness at the set interval, and;
turning off the air cleaner (20) if the cleanness value sensed by the cleanness sensor (40) is higher than the set value.

8. The method as claimed in any of claims 4 to 6, further comprising: after the initial set time period,
resetting a timer when the air cleaner (20) is turned on;
storing the cleanness value based on which the air cleaner (20) is turned on;
after the storing step, sensing the cleanness value by the cleanness sensor (40); and
turning off the air cleaner (20) if the cleanness value sensed after the storing step is higher than the set value.

9. The method as claimed in claim 8, further comprising: after the initial set time period,
turning off the air cleaner (20) if the cleanness value sensed by the cleanness sensor (40) is lower than the set value and a time period after the timer is reset exceeds a reference set time period.

10. The method as claimed in claim 8 or 9, further comprising: after the initial set time period,
returning to the step after the step of the cleanness sensor to sense the cleanness value again if the cleanness value sensed after the storing step is lower than the set value, a time period after the timer is reset is shorter than a reference set time period, and the cleanness value exceeds a previously sensed value.

11. The method as claimed in any of claims 8 to 10, further comprising: after the initial set time period,
returning to the step for resetting the timer if the cleanness value sensed after the storing step is lower than the set value, a time period after the timer is reset is shorter than a reference set time period, and the cleanness value is lower than a previously sensed value.

12. The method as claimed in one of claims 9 to 11, wherein the reference set time period is longer than the initial set time period.

## Patentansprüche

1. Klimaanlage mit:
einem Gehäuse (2), das einen Lufteinlass (4, 5) und einen Luftauslass (6) aufweist, die darin ausgebildet sind;
einem Ventilator (8), der im Gehäuse angebracht ist;
einem Luftreiniger (20), der am Gehäuse angebracht ist, wobei der Luftreiniger (20) einen Ionisator (22) aufweist, der am Lufteinlass (4, 5) zum Erzeugen von Ionen mittels einer Entladung aus einer Kohlenfaserelektrode (34) angeordnet ist;
einem Reinheitssensor (40) zum Abtasten der Reinheit der in den Lufteinlass eingeleiteten Luft in einem festgelegten Intervall; und
eine Steuereinheit (60), die zum Steuern des Luftreinigers (20) in mindestens zwei unterschiedlichen Modi konfiguriert ist,
**dadurch gekennzeichnet, dass** die beiden unterschiedlichen Modi sind: ein Stabilisierungsmodus für eine festgelegte Anfangszeitspanne beim Starten des Betriebs der Klimaanlage, entsprechend dem der Luftreiniger (20) eingeschaltet wird, wenn der durch den Reinheitssensor (40) abgetastete Wert niedriger als ein vorher durch den Reinheitssensor (40) abgetasteter Wert ist; und ein allgemeiner Reinigungsmodus nach der festgelegten Anfangszeitspanne, entsprechend dem der Luftreiniger (20) eingeschaltet wird, wenn der durch den Reinheitssensor (40) abgetastete Wert niedriger als ein Sollwert ist, wobei die Steuereinheit (60) konfiguriert ist, im Stabilisierungsmodus den Luftreiniger (20) auszuschalten, wenn der durch den Reinheitssensor (40) abgetastete Reinheitswert höher als der Sollwert ist.

2. Klimaanlage nach Anspruch 1, wobei die Steuereinheit (60) konfiguriert ist, im allgemeinen Reinigungsmodus den Luftreiniger (20) auszuschalten, wenn der durch den Reinheitssensor (40) abgetastete Reinheitswert höher als der Sollwert ist.

3. Klimaanlage nach Anspruch 1, wobei der Luftreiniger (20) ferner einen elektrostatischen Filter (24) zum Durchschicken der in den Lufteinlass (4, 5) eingeleiteten Luft aufweist, um Fremdstoffe zu sammeln, die durch die Kohlenfaserelektrode (34) aufgeladen werden.

4. Verfahren zum Betreiben einer Klimaanlage, die einen Reinheitssensor (40) zum Abtasten der Luftreinheit in einem festgelegten Intervall und einen Luftreiniger (20) zum Reinigen der Luft aufweist, wobei der Luftreiniger (20) einen Ionisator (22) aufweist, der an einem Lufteinlass (4, 5) zum Erzeugen von Ionen mittels einer Entladung einer Kohlenfaserelektrode (34) angeordnet ist, wobei das Verfahren aufweist:
a) für eine festgelegte Anfangszeitspanne beim Starten des Betriebs der Klimaanlage, Einschalten des Luftreinigers (20), wenn ein durch den Reinheitssensor (40) abgetasteter Reinheitswert niedriger als ein vorher durch den Reinheitssensor (40) abgetasteter Wert ist; und
b) nach der festgelegten Anfangszeitspanne, Einschalten des Luftreinigers (20), wenn der durch den Reinheitssensor (40) abgetastete Reinheitswert niedriger als ein Sollwert ist,
wobei das Verfahren ferner aufweist: in der festgelegten Anfangszeitspanne,
Abtasten der Luftreinheit im festgelegten Intervall; und
Ausschalten des Luftreinigers (20), wenn der durch den Reinheitssensor (40) abgetastete Reinheitswert höher als der Sollwert ist.

5. Verfahren nach Anspruch 4, das ferner aufweist: in der festgelegten Anfangszeitspanne, Zurücksetzen eines Zeitgebers, wenn der Luftreiniger (20) eingeschaltet wird;
Speichern des Reinheitswerts, auf dem beruhend der Luftreiniger (20) eingeschaltet wird;
nach dem Speicherschritt, Abtasten des Reinheitswerts durch den Reinheitssensor (40); und
Ausschalten des Luftreinigers (20), wenn der nach dem Speicherschritt abgetastete Reinheitswert höher als der Sollwert ist.

6. Verfahren nach einem der Ansprüche 4 oder 5, wobei die festgelegte Anfangszeitspanne mindestens das Dreifache des festgelegten Intervalls beträgt.

7. Verfahren nach einem der Ansprüche 4 bis 6, das ferner aufweist: nach der festgelegten Anfangszeitspanne,
Abtasten der Luftreinheit im festgelegten Intervall, und
Ausschalten des Luftreinigers (20), wenn der durch den Reinheitssensor (40) abgetastete Reinheitswert höher als der Sollwert ist.

8. Verfahren nach einem der Ansprüche 4 bis 6, das ferner aufweist: nach der festgelegten Anfangszeitspanne,
Zurücksetzen eines Zeitgebers, wenn der Luftreiniger (20) eingeschaltet wird; Speichern des Reinheitswerts, auf dem beruhend der Luftreiniger (20) eingeschaltet wird;
nach dem Speicherschritt, Abtasten des Reinheitswerts durch den Reinheitssensor (40); und
Ausschalten des Luftreinigers (20), wenn der nach dem Speicherschritt abgetastete Reinheitswert höher als der Sollwert ist.

9. Verfahren nach Anspruch 8, das ferner aufweist: nach der festgelegten Anfangszeitspanne,
Ausschalten des Luftreinigers (20), wenn der durch den Reinheitssensor (40) abgetastete Reinheitswert niedriger als der Sollwert ist und eine Zeitspanne, nachdem der Zeitgeber zurückgesetzt wurde, eine festgelegte Bezugszeitspanne überschreitet.

10. Verfahren nach Anspruch 8 oder 9, das ferner aufweist: nach der festgelegten Anfangszeitspanne,
Zurückkehren zum Schritt nach dem Schritt des erneuten Abtastens des Reinheitswerts durch den Reinheitssensor, wenn der nach dem Speicherschritt abgetastete Reinheitswert niedriger als der Sollwert ist, eine Zeitspanne, nachdem der Zeitgeber zurückgesetzt wurde, kürzer als eine festgelegte Bezugszeitspanne ist und der Reinheitswert einen vorher abgetasteten Wert überschreitet.

11. Verfahren nach einem der Ansprüche 8 bis 10, das ferner aufweist: nach der festgelegten Anfangszeitspanne,
Zurückkehren zum Schritt zum Zurücksetzen des Zeitgebers, wenn der nach dem Speicherschritt abgetastete Reinheitswert niedriger als der Sollwert ist, eine Zeitspanne, nachdem der Zeitgeber zurückgesetzt wurde, kürzer als eine festgelegte Bezugszeitspanne ist und der Reinheitswert niedriger als ein vorher abgetasteter Wert ist.

12. Verfahren nach einem der Ansprüche 9 bis 11, wobei die festgelegte Bezugszeitspanne länger als die festgelegte Anfangszeitspanne ist.

## Revendications

1. Climatiseur, comprenant :
un boîtier (2) où sont formées une entrée d'air (4, 5) et une sortie d'air (6) ;
un ventilateur (8) monté dans le boîtier ;
un purificateur d'air (20) monté sur le boîtier, ledit purificateur d'air (20) comportant un ioniseur (22) disposé à l'entrée d'air (4, 5) pour la génération d'ions par décharge d'une électrode en fibre de carbone (34) ;
un capteur de propreté (40) destiné à détecter la propreté de l'air pénétrant dans l'entrée d'air à intervalles définis ; et
une unité de commande (60) prévue pour commander au moins deux modes différents pour le purificateur d'air (20),
**caractérisé en ce que** les deux modes différents sont : un mode de stabilisation pour une période initiale définie au démarrage de fonctionnement du climatiseur, dans lequel le purificateur d'air (20) est activé si la valeur détectée par le capteur de propreté (40) est inférieure à une valeur précédente détectée par le capteur de propreté (40) ; et un mode de nettoyage général consécutif à la période initiale définie, dans lequel le purificateur d'air (20) est désactivé si la valeur détectée par le capteur de propreté (40) est inférieure à une valeur définie,
l'unité de commande (60) étant en mode de stabilisation prévue pour désactiver le purificateur d'air (20) si la valeur de propreté détectée par le capteur de propreté (40) est supérieure à la valeur définie.

2. Climatiseur selon la revendication 1, où l'unité de commande (60) est en mode de nettoyage général prévue pour désactiver le purificateur d'air (20) si la valeur de propreté détectée par le capteur de propreté (40) est supérieure à la valeur définie.

3. Climatiseur selon la revendication 1, où le purificateur d'air (20) comprend en outre un filtre électrostatique (24) filtrant l'air pénétrant dans l'entrée d'air (4, 5) afin de retenir les matières étrangères chargées par l'électrode en fibre de carbone (34).

4. Procédé de fonctionnement d'un climatiseur comprenant un capteur de propreté (40) pour détecter la propreté de l'air à intervalles définis, et un purificateur d'air (20) pour nettoyer l'air, où le purificateur d'air (20) comporte un ioniseur (22) disposé à une entrée d'air (4, 5) pour la génération d'ions par décharge d'une électrode en fibre de carbone (34), ledit procédé comprenant :
a) pendant une période initiale définie au démarrage de fonctionnement du climatiseur, l'activation du purificateur d'air (20) si une valeur de propreté détectée par le capteur de propreté (40) est inférieure à une valeur précédente détectée par le capteur de propreté (40) ; et
b) après la période initiale définie, l'activation du purificateur d'air (20) si la valeur de propreté détectée par le capteur de propreté (40) est inférieure à une valeur définie, ledit procédé comprenant en outre : pendant la période initiale définie, la détection de la propreté de l'air à intervalles définis ; et
la désactivation du purificateur d'air (20) si la valeur de propreté détectée par le capteur de propreté (40) est supérieure à la valeur définie.

5. Procédé selon la revendication 4, comprenant en outre : pendant la période initiale définie, la réinitialisation d'un temporisateur quand le purificateur d'air (20) est activé ;
la mémorisation de la valeur de propreté sur la base de laquelle le purificateur d'air (20) est activé ;
après l'étape de mémorisation, la détection de la valeur de propreté par le capteur de propreté (40) ; et la désactivation du purificateur d'air (20) si la valeur de propreté détectée après l'étape de mémorisation est supérieure à la valeur définie.

6. Procédé selon la revendication 4 ou la revendication 5, où la période initiale définie représente au moins trois fois l'intervalle défini.

7. Procédé selon l'une des revendications 4 à 6, comprenant en outre : après la période initiale définie,
la détection de la propreté de l'air à intervalles définis, et ;
la désactivation du purificateur d'air (20) si la valeur de propreté détectée par le capteur de propreté (40) est supérieure à la valeur définie.

8. Procédé selon l'une des revendications 4 à 6, comprenant en outre : après la période initiale définie,
la réinitialisation d'un temporisateur quand le purificateur d'air (20) est activé ;
la mémorisation de la valeur de propreté sur la base de laquelle le purificateur d'air (20) est activé ;
après l'étape de mémorisation, la détection de la valeur de propreté par le capteur de propreté (40) ; et
la désactivation du purificateur d'air (20) si la valeur de propreté détectée après l'étape de mémorisation est supérieure à la valeur définie.

9. Procédé selon la revendication 8, comprenant en outre : après la période initiale définie, la désactivation du purificateur d'air (20) si la valeur de propreté détectée par le capteur de propreté (40) est inférieure à la valeur définie et si une durée après la réinitialisation du temporisateur dépasse une durée de référence définie.

10. Procédé selon la revendication 8 ou la revendication 9, comprenant en outre : après la période initiale définie,
le retour à l'étape suivant l'étape de détection par le capteur de propreté pour une nouvelle détection de la valeur de propreté si la valeur de propreté détectée après l'étape de mémorisation est inférieure à la valeur définie, si une durée après la réinitialisation du temporisateur est inférieure à une durée de référence définie, et si la valeur de propreté dépasse une valeur détectée précédente.

11. Procédé selon l'une des revendications 8 à 10, comprenant en outre : après la période initiale définie,
le retour à l'étape pour la réinitialisation du temporisateur si la valeur de propreté détectée après l'étape de mémorisation est inférieure à la valeur définie, si une durée après la réinitialisation du temporisateur est inférieure à une durée de référence définie, et si la valeur de propreté est inférieure à une valeur détectée précédente.

12. Procédé selon l'une des revendications 9 à 11, où la durée de référence définie est supérieure à la période initiale définie.
